# EUROPÄISCHE PATENTSCHRIFT

(11) **EP 4 350 485 B1**
(45) Veröffentlichungstag und Bekanntmachung des Hinweises auf die Patenterteilung: **04.12.2024**
(21) Anmeldenummer: 22200361.8
(22) Anmeldetag: 07.10.2022
(51) Int. Cl.: G06F 3/01, G05G 25/04, B60K 35/10, B60K 35/25

(54) **BEDIENELEMENT MIT EINEM VERBESSERT AUF DIE BETÄTIGUNGSFLÄCHE BESCHRÄNKTEN HAPTISCHEN FEEDBACK**
ACTUATOR HAVING IMPROVED HAPTIC FEEDBACK LIMITED TO ACTUATION AREA
ÉLÉMENT DE COMMANDE AVEC RÉTROACTION HAPTIQUE AMÉLIORÉE LIMITÉE À LA SURFACE D'ACTIONNEMENT

(43) Veröffentlichungstag der Anmeldung: 10.04.2024
(73) Patentinhaber: Preh GmbH, 97616 Bad Neustadt a.d. Saale (DE)
(72) Erfinder: BODENSTEIN, Tobias, 97616 Salz (DE)
(74) Vertreter: Lohmanns, Bernard

(56) Entgegenhaltungen:
- WO-A1-2022/178799
- DE-A1- 102020 120 711
- US-A1- 2010 079 264

## Beschreibung

Die Erfindung betrifft ein Bedienelement mit einem Betätigungsteil, welches eine Betätigungsfläche zur Vornahme einer Bedieneingabe eines Bedieners aufweist. Dem Betätigungsteil ist eine Detektionsmittel zugeordnet, um eine Berührung oder über eine Berührung hinausgehenden Betätigung des Betätigungsteils zu detektieren. Als Betätigung wird eine Verlagerung des Betätigungsteils unter Einwirken einer von einem Bediener aufgebrachten und auf die Betätigungsfläche einwirkenden Betätigungskraft verstanden. Dazu ist das Betätigungsteil regelmäßig elastisch schwingfähig an einem Träger gelagert, um einerseits für die Betätigung eine Verlagerung aber auch um eine Schwingungsanregung des Betätigungsteils zu ermöglichen. Um eine erzwungene Schwingung oder zumindest eine Auslenkung, ein sogenanntes aktives haptisches Feedback, zur haptischen Bestätigung bzw. Quittierung der zuvor erfolgten Berührung oder Betätigung zu erwirken, ist ein mit einem elektrischen Ansteuersignal beaufschlagbarer Aktuator vorgesehen. Generell besteht das Problem, dass die erzeugte Schwingungsanregung nicht auf die Betätigungsfläche beschränkt ist und sich die erzeugte Schwingung weiter, beispielsweise als Körperschall, über das Betätigungsteil ausbreitet. Dies hat mehrere Nachteile, einerseits besteht der Wunsch, das haptische Feedback auf die Betätigungsfläche zu beschränken, um so für den Bediener eine eindeutige Zuordnung zur jeweiligen Betätigungsfläche zu schaffen. Dies ist insbesondere bei ausgedehnten Oberflächen von Vorteil, bei denen die Betätigungsfläche nur ein Bruchteil der Oberfläche ausmacht oder mehrere Betätigungsflächen vorgesehen sind und die Beschränkung des haptischen Feedbacks auf den jeweiligen Bereich dem Bediener der haptischen Orientierung auf der Oberfläche dient. Darüber hinaus besteht das Problem, dass der ungedämpft sich ausbreitende Körperschall zur ungewollten Geräuschentstehung beitragen kann, wie beispielsweise in der Befestigungsstruktur außerhalb des Bedienelements, aber auch der durch den Körperschall erzeugte Sekundärschall kann problematisch sein.

Vor diesem Hintergrund bestand Bedarf nach einer Lösung für ein Bedienelement mit schwingungsfähigem Betätigungsteil zur Erzeugung eines aktiven haptischen Feedbacks, bei dem verbessert das aktive haptische Feedback auf die Betätigungsfläche beschränkt ist und das Bedienelement konstruktiv einfach und gewichtssparend realisiert werden kann. Diese Aufgabe wird durch ein Bedienelement gemäß Anspruch 1 gelöst. Eine gleichermaßen vorteilhafte Verwendung ist Gegenstand des nebengeordneten Anspruchs. Vorteilhafte Ausgestaltungen sind jeweils Gegenstand der abhängigen Ansprüche. Es ist darauf hinzuweisen, dass die in den Ansprüchen einzeln aufgeführten Merkmale in beliebiger, technologisch sinnvoller Weise miteinander kombiniert werden können und weitere Ausgestaltungen der Erfindung aufzeigen. Die Beschreibung, insbesondere im Zusammenhang mit den Figuren, charakterisiert und spezifiziert die Erfindung zusätzlich.

Die Erfindung betrifft ein Bedienelement. Der Begriff "Bedienelement" ist weit auszulegen und dient der Vornahme einer Bedieneingabe mittels eines bewegbaren Betätigungsteils im Rahmen einer Mensch-Maschine-Schnittstelle.

Das erfindungsgemäße Bedienelement weist einen Träger auf. Der Begriff "Träger" ist weit auszulegen und meint beispielsweise eine Komponente, die zur Festlegung des Bedienteils an einer tragenden Konstruktion dient oder beispielsweise mittelbar oder unmittelbar an einer Kraftfahrzeugkomponente festgelegt ist. Beispielsweise ist der Träger als Gehäuse ausgeführt. Beispielsweise ist der Träger bei der bestimmungsgemäßen Anbringung des Bedienelements für den Bediener nicht sichtbar. Der Träger ist beispielsweise aus einem Kunststoff, einem Metall oder einer metallischen Legierung, wie ZAMAK, oder Kombinationen daraus ausgebildet.

Das erfindungsgemäße Bedienelement weist ferner ein am Träger abgestütztes Betätigungsteil auf, welches eine einem Bediener zugewandte Sichtfläche ausbildet, die mindestens eine inselförmige Betätigungsfläche innerhalb der Sichtfläche ausbildet, wobei die Betätigungsfläche von einem freitragenden Betätigungsabschnitt des Betätigungsteils ausgebildet ist; und der Betätigungsabschnitt durch einen im Vergleich zu dem Betätigungsabschnitt flexibleren Isolationsabschnitt des Betätigungsteils umgeben ist, so dass der Betätigungsabschnitt schwingungsfähig, insbesondere in der zur Betätigungsfläche senkrechten Richtung, gegenüber dem Träger gelagert ist. Als "inselförmige" Anordnung der Betätigungsfläche innerhalb der Sichtfläche wird auch eine solche Anordnung verstanden, bei der ein Rand der Betätigungsfläche teilweise mit einer äußeren Grenze der Sichtfläche zusammenfällt, d.h. die "inselförmige" Anordnung setzt nicht zwingend eine gänzliche Platzierung im Inneren der Sichtfläche voraus. Bevorzugt ist jedoch vorgesehen, dass die Betätigungsfläche zur äußeren Grenze der Sichtfläche beabstandet angeordnet ist.

Das Bedienelement weist erfindungsgemäß Detektionsmittel zur Detektion einer Berührung der Betätigungsfläche und/oder zur Detektion einer Betätigung des Betätigungsteils auf. Beispielsweise ist eine kapazitive Berührsensorik zur Detektion der Berührung oder ein resistiver, kapazitiver, induktiver oder optischer Kraftsensor zur Detektion einer Betätigung des Betätigungsteils vorgesehen. Bevorzugt handelt es sich bei dem Kraftsensor um einen berührungslos arbeitenden Kraftsensor, d.h. die freitragende Betätigungsfläche stützt sich nicht über den Kraftsensor am Trägerteil ab.

Erfindungsgemäß ist ferner ein an dem Betätigungsabschnitt aus Sicht des Bedieners unter dem Betätigungsabschnitt bzw. auf dessen dem Bediener abgewandten Seite festgelegter Aktuator vorgesehen, der im Falle der positiven Detektion einer Betätigung oder Berührung von den Detektionsmitteln zur Anregung einer Schwingung des Betätigungsabschnitts für ein haptisches Feedback mit einem elektrischen Anregesignal beaufschlagt wird. Bei dem Aktuator handelt es sich um einen aktiven Aktuator, also einen durch ein von Detektionsmitteln bereitgestelltes, elektrisches Anregesignal triggerbaren Aktuator, der durch einen Impulseintrag, wie Stoßeintrag, oder Schwingungseintrag in den Betätigungsabschnitt des Betätigungsteils, in der Lage ist, in diesem eine Auslenkung oder Schwingung anzuregen, welche vom Bediener über den auf der Betätigungsfläche ruhenden Finger haptisch wahrnehmbar ist. Diese haptische Wahrnehmung dient beispielsweise als Bestätigungssignal für eine vorgenommene Berührung oder Betätigung oder als haptische Quittierung einer vorgenommenen Schalt- oder Steuereingabe. Bevorzugt handelt es sich bei dem Aktuator um einen auf Trägheit beruhenden, motorbasierten Aktuator, wie einen Motor auf dessen rotierender Antriebswelle eine bezüglich ihres Schwerpunkts exzentrisch montierte Masse festgelegt ist oder einen Magnetspulen-Aktuator oder einen piezoelektrischen Aktuator oder einen linearen Breitbandaktuator, wie einen Tauchspulenaktuator (englische Bezeichnung; Voice-Coil-Actuator) oder einen linearen Resonanzaktuator. Bevorzugt ist der Aktuator ausschließlich am Betätigungsteil festgelegt, beispielsweise durch Verschrauben oder Verkleben.

Erfindungsgemäß variiert die dynamische Steife, die als örtlicher Quotient aus dem lokalen dynamischen Elastizitätsmodul und der lokalen Dicke des Betätigungsteils verstanden wird, entlang einer aus dem Betätigungsabschnitt in oder durch den Isolationsabschnitt führenden, maximal 1 cm langen, auf der Sichtfläche liegenden Messstrecke derart, dass eine an einem in der Betätigungsfläche liegenden Anfang der Messtrecke bestimmte, erste Übertragungsfunktion sich für einen zusammenhängenden, zwischen 30 Hz und 1.000 Hz liegenden Frequenzbereich um mindestens 5 dB, bevorzugt mindestens 10 dB, von einer an einem außerhalb der Betätigungsfläche liegenden Ende der Messtrecke bestimmten zweiten Übertragungsfunktion für denselben Frequenzbereich unterscheidet. Beispielsweise liegt das Ende innerhalb einer dem Isolationabschnitt zugeordneten Isolationsfläche beispielsweise an deren äußeren, von der Betätigungsfläche weitest entfernten Rand. Beispielsweise wird die Übertragungsfunktion für ein jeweils gleiches, auf 10 Hz bis 4.000 Hz bandbegrenztes, als Weißes Rauschen, Rosa Rauschen oder als ein Multi-Sinus ausgebildetes, elektrisches Anregesignal ermittelt.

Durch die erfindungsgemäße Ausgestaltung des Isolationsabschnitts wird erreicht, dass bei einem für die haptische Anregung typischen Anregespektrum des Anregesignals eine signifikante Dämpfung der Schwingungsübertragung in den außerhalb des Betätigungsabschnitts liegenden Bereich des Betätigungsteils erreicht wird und somit das haptische Feedback in maximalem spektralen Umfang auf den Betätigungsabschnitt mit seiner Betätigungsfläche begrenzt ist und außerhalb dieser so entsprechend gedämpft ist, dass dem Bediener eine haptische Lokalisierung des haptischen Feedbacks auf die eigentliche in der Sichtfläche liegenden Betätigungsfläche gelingt. Dies führt ferner dazu, dass die Schallübertragung in den Bereich außerhalb des Betätigungsabschnitts minimiert wird. Das haptische Feedback wird somit nicht nur verbessert örtlich an die Betätigungsfläche gebunden sondern auch insgesamt verbessert.

Bevorzugt ist das zur haptischen Anregung bestimmte, elektrische Anregesignal so bandbegrenzt, dass dessen Anregespektrum, nämlich das Amplitudenspektrum des Anregesignals, zwischen 30 Hz bis 1.000 Hz, bevorzugt zwischen 40 Hz bis 600 Hz liegt und zumindest den zuvor beschriebenen Frequenzbereich teilweise oder ganz umfasst. Bevorzugt liegt das Anregespektrum des Anregesignals ganz, zu 80% oder zumindest überwiegend im zuvor erwähnten Frequenzbereich. Bandbegrenzt bedeutet im Sinne der Erfindung, dass das Anregspektrum eine 3-dB Bandbreite um ein Maximum aufweist. Die Grenzfrequenzen sind bei dem halben Maximum festgelegt, was einer Absenkung auf rund 3 dB entspricht.

Bevorzugt wird die Variation der dynamischen Steife durch eine Änderung der senkrecht zur Sichtfläche bestimmten Dicke des Betätigungsteils und/oder eine lokale Änderung der Materialzusammensetzung des Betätigungsteils bewirkt. Bevorzugt handelt es sich um eine sprunghafte Änderung. Als sprunghaft oder unstetig wird ein Übergang verstanden, wenn sich die resultierend dynamische Steife innerhalb eines Streckenabschnitts von 1 mm entlang der Messstrecke mindestens verdoppelt oder höchstens halbiert. Beispielsweise sorgt die sprunghafte Änderung für eine abrupte Änderung des Wellenwiderstands, so dass es zu Reflexionen in den Betätigungsabschnitt und damit Dämmung bei der Schallübertragung aus dem Betätigungsabschnitt kommt. Beispielsweise definiert die sprunghafte Änderung der Materialzusammensetzung und/oder der Dicke des Betätigungsteils die äußere Begrenzung der Betätigungsfläche und damit den Betätigungsabschnitt. Beispielsweise ist die Dicke des Betätigungsabschnitts bis auf möglicherweise vorgesehene Dickenschwankungen, wie Stege oder Bohrungen, zur Befestigung des Aktuators im Wesentlichen konstant.

Bevorzugt wird die Änderung der Dicke durch eine auf der dem Bediener abgewandten Seite des Betätigungsteils vorgesehene Nut ausgebildet, wobei die innere, zur Betätigungsfläche nähere Flanke der Nut die sprunghafte Dickenänderung ist.

Bevorzugt ist die Dauer des elektrischen Anregesignals auf weniger als 100 ms, bevorzugt weniger als 25 ms begrenzt, um niederfrequente Anteile im Anregespektrum zu reduzieren.

Bevorzugt ist der Isolationsabschnitt den Betätigungsabschnitt vollständig umlaufend ausgebildet.

Bevorzugt ist das Betätigungsteil zumindest im Betätigungsabschnitt durch einen Schichtaufbau aus mindestens zwei Schichten ausgebildet, wobei sich wenigstens zwei Schichten im Elastizitätsmodul unterscheiden.

Dabei ist bevorzugt eine Schicht des Schichtaufbaus eine hochfeste Schicht aus einem Material mit dem größten Elastizitätsmodul des Schichtaufbaus ist, die sich im Wesentlichen parallel zur Betätigungsfläche, beispielsweise zwischen dem Aktuator und der Betätigungsfläche erstreckt.

Bevorzugt ist eine Schichtdicke der hochfesten Schicht im Isolationsabschnitt reduziert ist, um die Änderung der Dicke bereitzustellen.

Bevorzugt ist die hochfeste Schicht aus einem thermoplastischen Kunststoff, wie Polycarbonat oder Polymethylmethacrylat, insbesondere einem faserverstärkten thermoplastischen Kunststoff, ausgebildet, um dem Betätigungsabschnitt eine vergleichsweise hohe Steifigkeit zu verleihen.

Gemäß einer bevorzugten Ausgestaltung weist der Schichtaufbau eine hochelastische Schicht aus einem Material mit dem kleinsten Elastizitätsmodul des Schichtaufbaus auf, welche innerhalb des Isolationsabschnitts die größte Schichtdicke aller am Isolationsabschnitt beteiligten Schichten aufweist, um dessen Flexibilität bereitzustellen.

Bevorzugt ist die hochelastische Schicht aus einem thermoplastischen Elastomer ausgebildet.

Bevorzugt weit der Schichtaufbau eine zusätzliche Schicht zur Bereitstellung der Materialänderung und der Dickenänderung im Isolationsabschnitt auf. Beispielsweise weist die Schicht ein Material mit höherer akustisch dämpfender Wirkung als jedes Material des Betätigungsteils im Betätigungsabschnitt auf.

Bevorzugt macht die Betätigungsfläche weniger als die Hälfte, bevorzugt weniger als ein 1/5, bevorzugter weniger als 1/10 der dem Bediener zugewandten Sichtfläche des Betätigungsteils aus. Bevorzugt überschreitet die Betätigungsfläche einen Maximaldurchmesser von 2 cm nicht.

Gemäß einer bevorzugten Ausgestaltung sind mehrere Betätigungsabschnitte mit zugehörigem Aktuator und umgebendem Isolationsabschnitt vorgesehen. Durch die erfindungsgemäße Ausführungsform ist es somit möglich auch bei mehreren Betätigungsflächen, diese aufgrund der örtlich beschränkten Wirkung des haptischen Feedbacks haptisch zu lokalisieren, ohne dass es einer visuellen Überprüfung bedarf, was insbesondere bei der Verwendung im Kraftfahrzeug von Vorteil ist, da dem Fahrer bei den meisten Anbringungsorten die Zeit zur visuellen Überprüfung fehlt. Beispielsweise ist es so möglich, durch Individualisierung des haptischen Feedbacks durch spezifische Anregespektren, dem Bediener die Möglichkeit zu geben, spezifische Betätigungsflächen auf der Sichtfläche anhand des haptischen Feedbacks haptisch zu lokalisieren.

Die Erfindung betrifft ferner aus den zuvor genannten Gründen die Verwendung des erfindungsgemäßen Bedienelements in einer seiner zuvor beschriebenen Ausführungsformen in einem Kraftfahrzeug.

Die Erfindung wird anhand der nachfolgenden Figuren näher erläutert. Die Figuren sind dabei nur beispielhaft zu verstehen und stellen jeweils lediglich eine bevorzugte Ausführungsvariante dar. Es zeigen:
- Fig. 1: eine Schnittdarstellung einer Ausführungsform des erfindungsgemäßen Bedienelements 1,
- Fig. 2: eine spektrale Darstellung der ersten und zweiten Übertragungsfunktion;
- Fig. 3: ein elektrisches Anregesignal in der Zeitdarstellung.

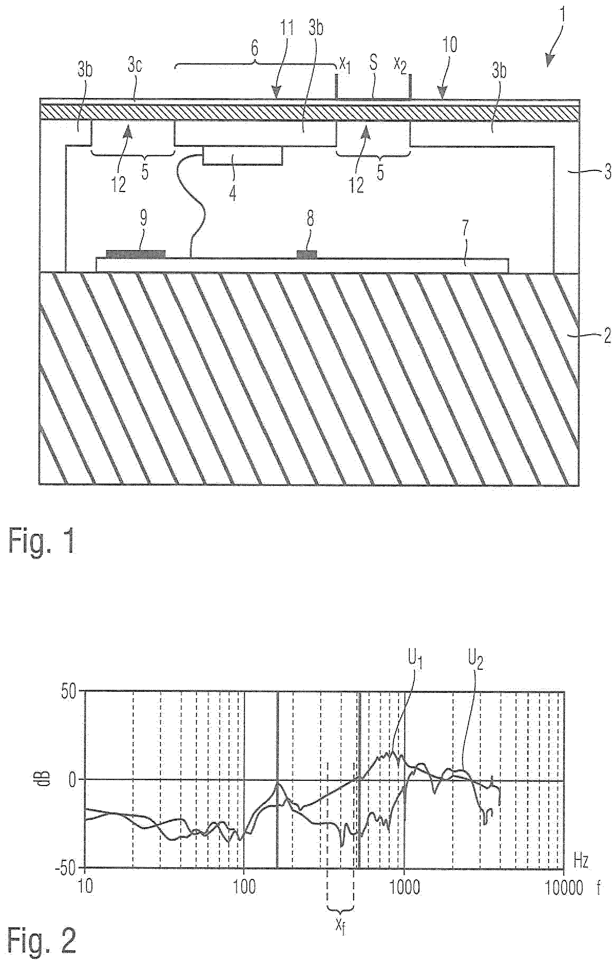

Figur 1 zeigt eine erste Ausführungsform des erfindungsgemäßen Bedienelements 1. Es dient der Vornahme einer Bedieneingabe mittels eines bewegbaren Betätigungsteils 2 im Rahmen einer Mensch-Maschine-Schnittstelle.

Das erfindungsgemäße Bedienelement 1 weist einen Träger 2 auf. Der Begriff "Träger" ist weit auszulegen und meint beispielsweise eine Komponente, die zur Festlegung des Bedienteils an einer tragenden Konstruktion dient oder beispielsweise mittelbar oder unmittelbar an einer Kraftfahrzeugkomponente festgelegt ist. hier ist der Träger 2 als Gehäuse ausgeführt und bei der bestimmungsgemäßen Anbringung des Bedienelements 1 für den Bediener nicht sichtbar. Der Träger 3 ist aus einem Kunststoff, einem Metall oder einer metallischen Legierung, wie ZAMAK, oder Kombinationen daraus ausgebildet und dient ferner der Festlegung einer Leiterplatte 7, welche die Detektionsmittel 8, 9 zur Berühr- bzw. Betätigungserkennung, wie einen kapazitiven Kraftsensor 8 und einen Mikroprozessor 9, trägt.

Das erfindungsgemäß Bedienelement 1 weist ferner ein am Träger 2 abgestütztes Betätigungsteil 3 auf, welches eine einem Bediener zugewandte Sichtfläche 10 ausbildet, die mindestens eine inselförmige Betätigungsfläche 11 innerhalb der Sichtfläche 10 ausbildet, wobei die Betätigungsfläche 11 von einem freitragenden Betätigungsabschnitt 6 des Betätigungsteils 3 ausgebildet ist; und der Betätigungsabschnitt 6 durch einen im Vergleich zu dem Betätigungsabschnitt 6 flexibleren Isolationsabschnitt 5 des Betätigungsteils 3 umgeben ist, so dass der Betätigungsabschnitt 6 schwingungsfähig, insbesondere in der zur Betätigungsfläche 11 senkrechten Richtung, gegenüber dem Träger 2 gelagert ist.

Erfindungsgemäß ist ferner ein an dem Betätigungsabschnitt 6 aus Sicht des Bedieners unter dem Betätigungsabschnitt 6 bzw. auf dessen dem Bediener abgewandten Seite festgelegter Aktuator 4 vorgesehen, der im Falle der positiven Detektion einer Betätigung oder Berührung von den Detektionsmitteln 8, 9 zur Anregung einer Schwingung des Betätigungsabschnitts 6 für ein haptisches Feedback mit einem elektrischen Anregesignal I(t) beaufschlagt wird. Bei dem Aktuator 4 handelt es sich um einen aktiven Aktuator, also einen durch ein von Detektionsmitteln 8, 9 bereitgestelltes, elektrisches Ansteuersignal triggerbaren Aktuator, der durch einen Impulseintrag, wie Stoßeintrag, oder Schwingungseintrag in den Betätigungsabschnitt 6 des Betätigungsteils 3, in der Lage ist, in diesem eine Auslenkung oder Schwingung anzuregen, welche vom Bediener über den auf der Betätigungsfläche 11 ruhenden Finger haptisch wahrnehmbar ist. Diese haptische Wahrnehmung dient beispielsweise als Bestätigungssignal für eine vorgenommene Berührung oder Betätigung oder als haptische Quittierung einer vorgenommenen Schalt- oder Steuereingabe. Bevorzugt handelt es sich bei dem Aktuator 4 um einen Tauchspulenaktuator (englische Bezeichnung; Voice-Coil-Actuator) oder einen linearen Resonanzaktuator. Bei der gezeigten Ausführungsform ist der Aktuator 4 ausschließlich am Betätigungsteil 3 festgelegt, beispielsweise durch Verschrauben oder Verkleben. Bevorzugt macht die Betätigungsfläche 11 weniger als die Hälfte, bevorzugt weniger als ein 1/5, bevorzugter weniger als 1/10 der dem Bediener zugewandten Sichtfläche 10 des Betätigungsteils 3 aus. Bevorzugt überschreitet die Betätigungsfläche 11 einen Maximaldurchmesser von 2 cm nicht.

Durch den Aufbau des Betätigungsteils 3 variiert die dynamische Steife, die als örtlicher Quotient aus dem lokalen dynamischen Elastizitätsmodul und der lokalen Dicke des Betätigungsteils verstanden wird, entlang einer aus dem Betätigungsabschnitt 6 in oder durch den Isolationsabschnitt 5 führenden, maximal 1 cm langen, auf der Sichtfläche 10 liegenden Messstrecke s derart, dass eine an einem in der Betätigungsfläche 11 liegenden Anfang X₁ der Messtrecke s bestimmte, erste Übertragungsfunktion U₁ sich für einen zusammenhängenden, zwischen 30 Hz und 1.000 Hz liegenden Frequenzbereich um mindestens 5 dB von einer an einem außerhalb der Betätigungsfläche liegenden Ende X₂ der Messtrecke s bestimmten zweiten Übertragungsfunktion U₂ für denselben Frequenzbereich unterscheidet, wie es in Figur 2 gezeigt ist. Beispielsweise liegt das Ende X₂ jenseits des Isolationsabschnitts also in einem Teil der Sichtfläche 10 außerhalb der dem Isolationsabschnitt 5 zugeordneten Isolationsfläche und außerhalb der Betätigungsfläche 11. Beispielsweise wird die Übertragungsfunktion für ein jeweils gleiches, auf 10 Hz bis 4.000 Hz bandbegrenztes, als Weißes Rauschen, Rosa Rauschen oder als ein Multi-Sinus ausgebildetes, elektrisches, am Aktuator 4 anliegendes Anregesignal I(t) durch einen Schwingungsaufnehmer, wie durch einen piezoelektrischen Wandler oder ein Laservibrometer, ermittelt.

Durch die erfindungsgemäße Ausgestaltung des Isolationsabschnitts 5 wird erreicht, dass bei einem für die haptische Anregung typischen Anregespektrum, wie es beispielhaft in der Figur 2 als X_{f} markiert ist, welches es sich aus dem Anregesignal I(t) ergeben soll, eine signifikante Dämpfung der Schwingungsübertragung in den außerhalb des Betätigungsabschnitts 6 liegenden Bereich des Betätigungsteils 3 erreicht wird und somit das haptische Feedback in maximalem spektralen Umfang auf den Betätigungsabschnitt 6 mit seiner Betätigungsfläche 11 begrenzt ist und außerhalb dieser so entsprechend gedämpft ist, dass dem Bediener eine haptische Lokalisierung des haptischen Feedbacks auf die eigentliche in der Sichtfläche 10 liegenden Betätigungsfläche 11 gelingt. Dies führt ferner dazu, dass die Schallübertragung in den Bereich außerhalb des Betätigungsabschnitts 6 minimiert wird. Das haptische Feedback wird somit nicht nur verbessert örtlich an die Betätigungsfläche 11 gebunden sondern auch insgesamt verbessert.

Dabei ist das zur haptischen Anregung bestimmte, elektrische Anregesignal so bandbegrenzt, dass dessen Anregespektrum zwischen 30 Hz bis 1.000 Hz, bevorzugt zwischen 40 Hz bis 600 Hz liegt und zumindest den zuvor beschriebenen Frequenzbereich Xf teilweise oder ganz umfasst. Bevorzugt liegt das Anregespektrum des Anregesignals ganz, zu 80% oder zumindest überwiegend im zuvor erwähnten Frequenzbereich Xf.

Die zuvor erwähnte Variation der dynamischen Steife wird durch eine Änderung der senkrecht zur Sichtfläche bestimmten Dicke des Betätigungsteils 3 und/oder eine lokale Änderung der Materialzusammensetzung des Betätigungsteils 3 bewirkt. Dabei handelt es sich um eine sprunghafte Änderung. Als sprunghaft oder unstetig wird ein Übergang verstanden, wenn sich die resultierende dynamische Steife innerhalb eines 1 mm langen Streckenabschnitts entlang der Messstrecke s mindestens verdoppelt oder höchstens halbiert. Bei der gezeigten Ausführungsform wird die Änderung der Dicke durch eine auf der dem Bediener abgewandten Seite des Betätigungsteils 3 vorgesehene Nut 12 ausgebildet, wobei die innere zur Betätigungsfläche 11 nähere Flanke der Nut 12 die sprunghafte Dickenänderung ist.

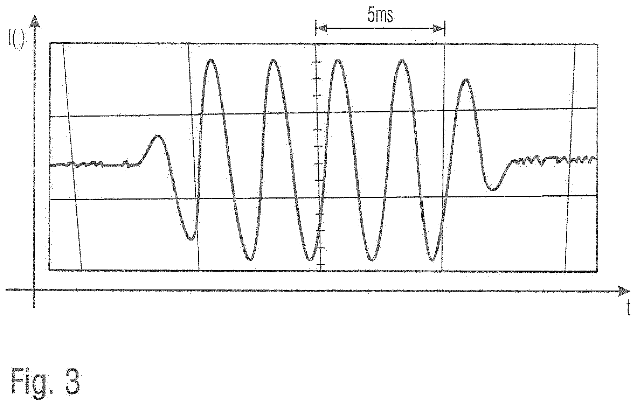

Wie Figur 3 zeigt, ist die Dauer des elektrischen Anregesignals auf weniger als 100 ms, bevorzugt weniger als 25 ms begrenzt, um niederfrequente Anteile im Anregespektrum zu reduzieren.

Wie Figur 1 zeigt, ist das Betätigungsteil 3 zumindest im Betätigungsabschnitt durch einen Schichtaufbau aus mehreren Schichten 3a, 3b, 3c ausgebildet, wobei sich wenigstens zwei Schichten 3a, 3b im Elastizitätsmodul unterscheiden.

Dabei ist eine Schicht des Schichtaufbaus eine hochfeste Schicht 3b aus einem Material mit dem größten Elastizitätsmodul des Schichtaufbaus ist, die sich im Wesentlichen parallel zur Betätigungsfläche 11, hier zwischen dem Aktuator 4 und der Betätigungsfläche 11 erstreckt.

Ferner ist die Schichtdicke der hochfesten Schicht 3b im Isolationsabschnitt auf Null reduziert, um die zuvor erwähnte Änderung der Dicke bereitzustellen.

Die hochfeste Schicht 3b ist aus einem thermoplastischen Kunststoff, wie Polycarbonat oder Polymethylmethacrylat, insbesondere einem faserverstärkten thermoplastischen Kunststoff, ausgebildet, um dem Betätigungsabschnitt 6 eine vergleichsweise hohe Steifigkeit zu verleihen.

Der Schichtaufbau weist ferner eine hochelastische Schicht 4a aus einem Material mit dem kleinsten Elastizitätsmodul des Schichtaufbaus auf, welche innerhalb des Isolationsabschnitts die größte Schichtdicke aller am Isolationsabschnitt 5 beteiligten Schichten 3b, 3c aufweist, um dessen Flexibilität bereitzustellen. Die die Sichtfläche 10 vollflächig überdeckende Schicht 3c ist lediglich eine vergleichsweise dünne Deckschicht, wie eine transparente Folie.

Dabei ist die hochelastische Schicht 3a aus einem thermoplastischen Elastomer ausgebildet.

## Patentansprüche

1. Bedienelement (1), aufweisend:
einen Träger (2);
ein am Träger abgestütztes Betätigungsteil (3), welches eine einem Bediener zugewandte Sichtfläche (10) ausbildet, die mindestens eine inselförmige Betätigungsfläche (11) innerhalb der Sichtfläche (10) ausbildet, wobei die Betätigungsfläche (11) von einem freitragenden Betätigungsabschnitt (6) des Betätigungsteils (2) ausgebildet ist; und der Betätigungsabschnitt (6) durch einen im Vergleich zu dem Betätigungsabschnitt (6) flexibleren Isolationsabschnitt (5) des Betätigungsteils (3) umgeben ist, so dass der Betätigungsabschnitt (6) schwingungsfähig gegenüber dem Träger (2) gelagert ist;
Detektionsmittel (8, 9) zur Detektion einer Berührung der Betätigungsfläche und/oder Betätigung des Betätigungsteils (3);
einen am Betätigungsabschnitt (6) des Betätigungsteils (3) aus Sicht des Bedieners auf der dem Bediener abgewandten Seite festgelegten Aktuator (4), der im Falle der positiven Detektion einer Betätigung oder Berührung von den Detektionsmitteln (8, 9) zur Anregung einer Schwingung des Betätigungsabschnitts (6) für ein haptisches Feedback mit einem elektrischen Anregesignal (I(t)) beaufschlagt wird;
wobei entlang einer aus dem Betätigungsabschnitt (6) in oder durch den Isolationsabschnitt (5) führenden, maximal 1 cm langen, auf der Sichtfläche liegenden Messstrecke (s) bestimmte, dynamische Steife des Betätigungsteils (2) derart variiert, dass eine an einem Anfang (x₁) der Messtrecke (s) bestimmte, erste Übertragungsfunktion (U₁) sich für einen zusammenhängenden, zwischen 30 Hz und 1.000 Hz liegenden Frequenzbereich (X_{F}) um mindestens 5 dB von einer an einem Ende (x₂) der Messtrecke (2) bestimmten zweiten Übertragungsfunktion (U₂) für denselben Frequenzbereich unterscheidet.

2. Bedienelement (1) gemäß Anspruch 1, wobei das elektrische Anregesignal (I(t)) ein zwischen 30 Hz bis 1.000 Hz, bevorzugt zwischen 40 Hz bis 600 Hz, liegendes Anregespektrum aufweist, welches den Frequenzbereich (X_{F}) zumindest teilweise, bevorzugt vollständig, umfasst.

3. Bedienelement (1) gemäß einem der vorhergehenden Ansprüche, wobei die Variation der dynamischen Steife durch eine Änderung der senkrecht zur Sichtfläche bestimmten Dicke und/oder eine Änderung der Materialzusammensetzung des Betätigungsteils (2), eine bevorzugt sprunghafte Änderung, bewirkt wird.

4. Bedienelement (1) gemäß dem vorhergehenden Anspruch, wobei die Änderung der Dicke durch eine auf der dem Bediener (B) abgewandten Seite des Betätigungsteils (2) vorgesehene Nut (12) ausgebildet ist.

5. Bedienelement (1) gemäß einem der vorhergehenden Ansprüche, wobei eine Dauer des elektrischen Anregesignal auf weniger als 100 ms, bevorzugt weniger als 25 ms begrenzt ist.

6. Bedienelement (1) gemäß einem der vorhergehenden Ansprüche, wobei der Isolationsabschnitt (5) den Betätigungsabschnitt (6) vollständig umlaufend ausgebildet ist.

7. Bedienelement (1) gemäß einem der vorhergehenden Ansprüche, wobei das Betätigungsteil (3) zumindest im Betätigungsabschnitt durch einen Schichtaufbau aus mindestens zwei Schichten (3a, 3b, 3c) ausgebildet ist, wobei sich wenigstens zwei Schichten (3a, 3b) im Elastizitätsmodul unterscheiden.

8. Bedienelement gemäß dem vorhergehenden Anspruch, wobei eine Schicht des Schichtaufbaus eine hochfeste Schicht (3b) aus einem Material mit dem größten Elastizitätsmodul des Schichtaufbaus ist, die sich im Wesentlichen parallel zur Betätigungsfläche (3) erstreckt.

9. Bedienelement (1) gemäß dem vorhergehenden Anspruch, wobei eine Schichtdicke der hochfesten Schicht (3b) im Isolationsabschnitt (5) reduziert ist, um die Änderung der Dicke bereitzustellen.

10. Bedienelement (1) gemäß einem der beiden vorhergehenden Ansprüche, wobei die hochfeste Schicht (3b) aus einem thermoplastischen Kunststoff, wie Polycarbonat oder Polymethylmethacrylat, insbesondere einem faserverstärkten thermoplastischen Kunststoff, ausgebildet ist.

11. Bedienelement (1) gemäß einem der vorhergehenden Ansprüche 7 bis 10, wobei der Schichtaufbau eine hochelastische Schicht (3a) aus einem Material mit dem kleinsten Elastizitätsmodul des Schichtaufbaus aufweist, welche innerhalb des Isolationsabschnitts (5) die größte Schichtdicke aller am Isolationsabschnitt (5) beteiligten Schichten aufweist.

12. Bedienelement (1) gemäß dem vorhergehenden Anspruch, wobei die hochelastische Schicht (3a) aus einem thermoplastischen Elastomer ausgebildet ist.

13. Bedienelement (1) gemäß einem der vorhergehenden Ansprüche 7 bis 12, wobei der Schichtaufbau eine zusätzliche Schicht zur Bereitstellung der Materialänderung und der Dickenänderung aufweist.

14. Bedienelement (1) gemäß einem der vorhergehenden Ansprüche, wobei der Aktuator (4) sich ausschließlich am Betätigungsteil abstützt.

15. Bedienelement (1) gemäß einem der vorhergehenden Ansprüche, wobei die Betätigungsfläche (11) weniger als die Hälfte, bevorzugt weniger als 1/5, einer dem Bediener zugewandten Sichtfläche (10) des Betätigungsteils (3) ausmacht.

16. Bedienelement (1) gemäß einem der vorhergehenden Ansprüche, wobei mehrere Betätigungsabschnitte (6) mit zugehörigem Aktuator (4) und umgebendem Isolationsabschnitt (5) vorgesehen sind.

17. Bedienelement (1) gemäß einem der vorhergehenden Ansprüche, wobei die Betätigungsfläche (11) einen Maximaldurchmesser von 2 cm nicht überschreitet.

18. Verwendung des Bedienelements (1) gemäß einem der vorhergehenden Ansprüche 1 bis 17 in einem Kraftfahrzeug.

## Claims

1. An operating member (1), comprising:
a carrier (2);
an actuation part (3), which is supported on the carrier and which forms a visible surface (10) facing towards an operator that forms at least one insular actuation surface (11) within the visible surface (10), wherein the actuation surface (11) is formed by a cantilevered actuation portion (6) of the actuation part (2); and the actuation portion (6) is surrounded by an insulation portion (5) of the actuation part (3), which is more flexible compared to the actuation portion (6), so that the actuation portion (6) is supported so as to be capable of vibrating relative to the carrier (2);
detection means (8, 9) for detecting a touch on the actuation surface and/or an actuation of the actuation part (3);
an actuator (4) fixed on the actuation portion (6) of the actuation part (3) on the side that, from the point of view of the operator, faces away from the operator, to which an electrical excitation signal (I(t)) is applied by the detection means (8, 9) in case of a positive detection of an actuation or touch, in order to excite a vibration of the actuation portion (6) for a haptic feedback;
wherein a dynamic rigidity of the actuation part (2) determined along a measurement section (s) with a maximum length of 1 cm, leading from the actuation portion (6) in or through the insulation portion (5) and located on the visible surface, varies such that a first transfer function (U₁) determined at a beginning (x₁) of the measurement section (s) differs, for a continuous frequency range (X_{F}) between 30 Hz and 1,000 Hz, by at least 5 dB from a second transfer function (U₂) determined at an end (x₂) of the measurement section (2) for the same frequency range.

2. The operating member (1) according to claim 1, wherein the electrical excitation signal (I(t)) has an excitation spectrum between 30 Hz and 1,000 Hz, preferably between 40 Hz and 600 Hz, which at least partially, preferably completely, includes the frequency range (X_{F}).

3. The operating member (1) according to any one of the preceding claims, wherein the variation of the dynamic rigidity is caused by a change in the thickness determined perpendicularly to the visible surface and/or a change in the material composition of the actuation part (2), a preferably sudden change.

4. The operating member (1) according to the preceding claim, wherein the change in thickness is formed by a groove (12) provided on the side of the actuation part (2) facing away from the operator (B).

5. The operating member (1) according to any one of the preceding claims, wherein a duration of the electrical excitation signal is limited to less than 100 ms, preferably less than 25 ms.

6. The operating member (1) according to any one of the preceding claims, wherein the insulation portion (5) is formed so as to extend completely around the actuation portion (6).

7. The operating member (1) according to any one of the preceding claims, wherein the actuation part (3), at least in the actuation portion, is formed by a layer structure consisting of at least two layers (3a, 3b, 3c), wherein at least two layers (3a, 3b) differ with regard to the modulus of elasticity.

8. The operating member according to the preceding claim, wherein one layer of the layer structure is a high-strength layer (3b) of a material with the greatest modulus of elasticity of the layer structure, which extends substantially parallel to the actuation surface (3).

9. The operating member (1) according to the preceding claim, wherein a layer thickness of the high-strength layer (3b) is reduced in the insulation portion (5) in order to provide the change in thickness.

10. The operating member (1) according to any one of the two preceding claims, wherein the high-strength layer (3b) is formed from a thermoplastic, such as polycarbonate or polymethyl methacrylate, in particular a fiber-reinforced thermoplastic.

11. The operating member (1) according to any one of the preceding claims 7 to 10, wherein the layer structure has a highly elastic layer (3a) of a material with the smallest modulus of elasticity of the layer structure, which, within the insulation portion (5), has the greatest layer thickness of all layers involved in the insulation portion (5).

12. The operating member (1) according to the preceding claim, wherein the highly elastic layer (3a) is formed from a thermoplastic elastomer.

13. The operating member (1) according to any one of the preceding claims 7 to 12, wherein the layer structure has an additional layer for providing the change in material and the change in thickness.

14. The operating member (1) according to any one of the preceding claims, wherein the actuator (4) is supported exclusively on the actuation part.

15. The operating member (1) according to any one of the preceding claims, wherein the actuation surface (11) constitutes less than half, preferably less than 1/5, of a visible surface (10) of the actuation part (3) facing towards the operator.

16. The operating member (1) according to any one of the preceding claims, wherein several actuation portions (6) with an associated actuator (4) and a surrounding insulation portion (5) are provided.

17. The operating member (1) according to any one of the preceding claims, wherein the actuation surface (11) does not exceed a maximum diameter of 2 cm.

18. Use of the operating member (1) according to any one of the preceding claims 1 to 17 in a motor vehicle.

## Revendications

1. Élément de commande (1),comportant :
un support (2) ;
une partie d'actionnement (3) qui est en appui sur le support et qui forme une surface visible (10) dirigée vers un opérateur et qui forme au moins une surface d'actionnement (11) en forme d'îlot à l'intérieur de la surface visible (10), la surface d'actionnement (11) étant formée par une portion d'actionnement en porte-à-faux (6) de la partie d'actionnement (2) ; et
la portion d'actionnement (6) étant entourée d'une portion d'isolation (5) de la partie d'actionnement (3) qui est plus flexible que la portion d'actionnement (6), de sorte que la portion d'actionnement (6) soit montée de manière à pouvoir osciller par rapport au support (2) ;
des moyens de détection (8, 9) destinés à détecter un contact avec la surface d'actionnement et/ou l'actionnement de la partie d'actionnement (3) ;
un actionneur (4) qui est fixé à la portion d'actionnement (6) de la partie d'actionnement (3) du point de vue de l'opérateur du côté opposé à l'opérateur et qui, en cas de détection positive d'un actionnement ou d'un contact, est soumis à un signal d'excitation électrique (I(t)) par les moyens de détection (8, 9) afin de produire une vibration de la portion d'actionnement (6) en vue d'une rétroaction haptique ;
la rigidité dynamique déterminée de la partie d'actionnement (2) variant le long d'une section de mesure (s) qui est située sur la surface visible, qui a une longueur maximale de 1 cm et qui va de la portion d'actionnement (6) jusque dans ou à travers la portion d'isolation (5) de manière à ce qu'une première fonction de transfert (U₁), déterminée à un début (x₁) de la section de mesure (s), diffère, pour une gamme de fréquences cohérente (X_{F}) située entre 30 Hz et 1000 Hz, d'au moins 5 dB par rapport à une deuxième fonction de transfert (U₂), déterminée à une extrémité (x₂) de la section de mesure (2), pour la même gamme de fréquences.

2. Élément de commande (1) selon la revendication 1, le signal d'excitation électrique (I(t)) comportant un spectre d'excitation situé entre 30 Hz et 1000 Hz, de préférence entre 40 Hz et 600 Hz, qui couvre la gamme de fréquences (X_{F}) au moins partiellement, de préférence complètement.

3. Élément de commande (1) selon l'une des revendications précédentes, la variation de la rigidité dynamique étant provoquée par une modification de l'épaisseur déterminée perpendiculairement à la surface visible et/ou par une modification de la composition de matière de la partie d'actionnement (2), une modification de préférence brusque.

4. Élément de commande (1) selon la revendication précédente, la modification d'épaisseur étant formée par une rainure (12) prévue du côté de la partie d'actionnement (2) qui est opposé à l'opérateur (B).

5. Élément de commande (1) selon l'une des revendications précédentes, une durée du signal d'excitation électrique étant limitée à moins de 100 ms, de préférence moins de 25 ms.

6. Élément de commande (1) selon l'une des revendications précédentes, la portion d'isolation (5) étant conçue pour s'étendre entièrement autour de la portion d'actionnement (6).

7. Élément de commande (1) selon l'une des revendications précédentes, la partie d'actionnement (3) étant formée au moins dans la portion d'actionnement par une structure en couches formée d'au moins deux couches (3a, 3b, 3c), au moins deux couches (3a, 3b) différant par leur module d'élasticité.

8. Élément de commande selon la revendication précédente, une couche de la structure en couches étant une couche à haute résistance (3b) qui est formée d'une matière présentant le plus grand module d'élasticité de la structure en couches et qui s'étend sensiblement parallèlement à la surface d'actionnement (3).

9. Élément de commande (1) selon la revendication précédente, une épaisseur de couche de la couche à haute résistance (3b) étant réduite dans la portion d'isolation (5) afin de fournir la modification d'épaisseur.

10. Élément de commande (1) selon l'une des deux revendications précédentes, la couche à haute résistance (3b) étant formée d'une matière thermoplastique, telle que du polycarbonate ou du polyméthacrylate de méthyle, en particulier une matière thermoplastique renforcée par des fibres.

11. Élément de commande (1) selon l'une des revendications précédentes 7 à 10,
la structure en couches comportant une couche hautement élastique (3a) qui est formée d'une matière présentant le plus petit module d'élasticité de la structure en couches et qui, à l'intérieur de la portion d'isolation (5), présente la plus grande épaisseur de couche de toutes les couches impliquées dans la portion d'isolation (5).

12. Élément de commande (1) selon la revendication précédente, la couche hautement élastique (3a) étant formée à partir d'un élastomère thermoplastique.

13. Élément de commande (1) selon l'une des revendications précédentes 7 à 12, la structure en couches comportant une couche supplémentaire destinée à assurer la modification de matière et la modification d'épaisseur.

14. Élément de commande (1) selon l'une des revendications précédentes, l'actionneur (4) venant exclusivement en appui sur la portion d'actionnement.

15. Élément de commande (1) selon l'une des revendications précédentes, la surface d'actionnement (11) représentant moins de la moitié, de préférence moins de 1/5, d'une surface visible (10) de la partie d'actionnement (3) qui est dirigée vers l'opérateur.

16. Élément de commande (1) selon l'une des revendications précédentes, plusieurs portions d'actionnement (6) étant prévues qui sont pourvues d'un actionneur associé (4) et d'une portion d'isolation environnante (5).

17. Élément de commande (1) selon l'une des revendications précédentes, la surface d'actionnement (11) ne dépassant pas un diamètre maximal de 2 cm.

18. Utilisation de l'élément de commande (1) selon l'une des revendications précédentes 1 à 17 dans un véhicule automobile.
